# EUROPEAN PATENT APPLICATION

(11) **EP 4 760 661 A1**
(43) Date of publication of application: **17.06.2026**
(21) Application number: 24891627.2
(22) Date of filing: 13.09.2024
(51) Int. Cl.: G06V 40/12, G06V 40/13, G06V 10/24

(54) **PALM PRINT IMAGE PROCESSING METHOD AND ELECTRONIC DEVICE SUPPORTING SAME**

(30) Priority: 14.11.2023 KR 20230156996; 18.01.2024 KR 20240008178
(71) Applicant: Samsung Electronics Co., Ltd., Suwon-si, Gyeonggi-do 16677 (KR); UIF (University Industry Foundation), Yonsei University, Seoul 03722 (KR)
(72) Inventor: JEON, Taejae, Suwon-si Gyeonggi-do 16677 (KR); LEE, Jungho, Seoul 03722 (KR); YOO, Juwoan, Suwon-si Gyeonggi-do 16677 (KR); JANG, Sungjun, Seoul 03722 (KR); LEE, Sangyoun, Seoul 03722 (KR); LEE, Yongju, Seoul 03722 (KR)
(74) Representative: Gulde & Partner
(86) International application number: PCT/KR2024/014059
(87) International publication number: WO 2025/105680

(57) **Abstract**

An electronic device, according to various embodiments, comprises: a camera module; at least one processor; and a memory, wherein the memory may store instructions that, when executed by the at least one processor, instruct the electronic device to: acquire at least three feature coordinates from a palm image obtained via the camera module; identify a rotation angle of a palm on the basis of the at least three feature coordinates; and adjust a palm print recognition region on the basis of the rotation angle of the palm.

## Description

### [Technical Field]

Various embodiments disclosed in this specification relate to a palm print image processing method and an electronic device supporting the same.

### [Background Art]

Electronic devices store various pieces of personal information. The personal information needs to be protected from others. Protection of the personal information requires user authentication. User authentication may be performed through biometrics of a user. The biometrics is a technology for extracting a person's biometric information to identify or authenticate an individual. The biometric information is inherently difficult to forge or replicate. Consequently, as services like IoT-based fintech, healthcare, and location-based services are expanded, a biometric recognition technology is emerging as a secure security solution.

### [Disclosure]

### [Technical Problem]

### [Technical Solution]

The aforementioned biometric authentication may include palm print recognition, which extracts and authenticates palm prints (e.g., lines and fine lines of a palm) as biometric information. Such palm print recognition may provide a security having a certain level by extracting biometric information from an area wider than a finger.

However, as the palm prints are formed in an area wider than a finger, it is difficult to select a palm print recognition area, and it takes a relatively long time to extract the palm prints.

Accordingly, at least one embodiment among various embodiments provides a palm print image processing method of increasing palm print recognition speed and improving palm print recognition performance, and an electronic device supporting the same.

An electronic device according to various embodiments may include a camera module, at least one processor, and a memory. The memory may store instructions that, when executed by the at least one processor, cause the electronic device to obtain at least three feature coordinates from a palm image obtained through the camera module, to identify a rotation angle for a palm based on the at least three feature coordinates, and to adjust a palm print recognition area based on the rotation angle for the palm.

According to various embodiments, an operating method of an electronic device may include obtaining at least three feature coordinates from a palm image obtained through a camera module, identifying a rotation angle for a palm based on the at least three feature coordinates, and adjusting a palm print recognition area based on the rotation angle for the palm.

According to various embodiments, a computer-readable recording medium may store instructions for obtaining at least three feature coordinates from a palm image obtained through a camera module, identifying a rotation angle for a palm based on the at least three feature coordinates, and adjusting a palm print recognition area based on the rotation angle for the palm.

### [Advantageous Effects]

An electronic device according to various embodiments disclosed in this specification may increase palm print recognition speed and improve palm print recognition performance by dynamically adjusting a palm print recognition area depending on the posture of a palm and extracting a palm print through the adjusted palm print recognition area.

Effects capable of being obtained in this specification are not limited to the above-mentioned effects.

### [Description of Drawings]

FIG. 1 is a block diagram of an electronic device in a network environment, according to various embodiments.
FIG. 2 is a diagram for describing a palm print recognition function supported by an electronic device, according to various embodiments.
FIG. 3 is a diagram for describing an operation of extracting biometric information in an electronic device, according to various embodiments.
FIG. 4 is a diagram for describing an operation of extracting biometric information from a palm print recognition area in an electronic device, according to various embodiments.
FIGS. 5A and 5B are diagrams for describing an operation of setting a palm print recognition area in an electronic device, according to various embodiments.
FIG. 6 is a diagram for describing an operation of extracting feature coordinates from a palm image in an electronic device, according to various embodiments.
FIG. 7 is a diagram for describing a palm print recognition area according to the posture of a palm.
FIGS. 8 to 11 are drawings for describing an operation of dynamically adjusting a palm print recognition area in an electronic device, according to various embodiments.
FIG. 12 is a drawing for describing an operation of identifying the posture of a palm in an electronic device, according to various embodiments.
FIG. 13 is a drawing for describing an operation of correcting a location of a palm print recognition area in an electronic device, according to various embodiments.
FIG. 14 is a flowchart illustrating an operation of an electronic device, according to various embodiments.
FIG. 15 is a flowchart illustrating an operation of adjusting the palm print recognition area of an electronic device, according to various embodiments.
FIGS. 16A and 16B may be drawings for describing a normalization operation on a palm print recognition area, according to various embodiments.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein may be variously made without departing from the scope and spirit of the disclosure. With regard to description of drawings, similar components may be marked by similar reference numerals.

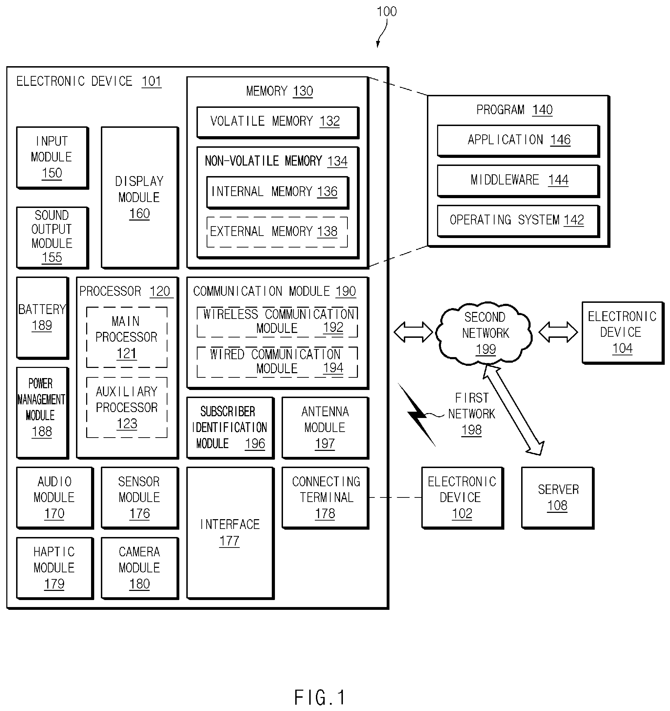

FIG. 1 is a block diagram of an electronic device 101 in a network environment 100, according to various embodiments.

Referring to FIG. 1, the electronic device 101 in the environment information 100 may communicate with an electronic device 102 over a first network 198 (e.g., a short range wireless communication network) or may communicate with at least one of an electronic device 104 or a server 108 over a second network 199 (e.g., a long distance wireless communication network). According to an embodiment, the electronic device 101 may communicate with the electronic device 104 through the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In any embodiment, the electronic device 101 may not include at least one (e.g., the connecting terminal 178) of the above-described components or may further include one or more other components. In some embodiments, some (e.g., the sensor module 176, the camera module 180, or the antenna module 197) of these components may be integrated into a single component (e.g., the display module 160).

For example, the processor 120 may execute software (e.g., a program 140) to control at least another component (e.g., hardware or software component) of the electronic device 101 connected to the processor 120, and may process and calculate various types of data. According to an embodiment, as at least part of data processing or calculation, the processor 120 may store instructions or data received from other components (e.g., the sensor module 176 or the communication module 190) into a volatile memory 132, may process instructions or data stored in the volatile memory 132, and may store the result data in a nonvolatile memory 134. According to an embodiment, the processor 120 may include a main processor 121 (e.g., a central processing unit or an application processor) and an auxiliary processor 123 (e.g., a graphic processing unit, a neural processing unit (NPU), an image signal processor, a sensor hub processor, or a communication processor) capable of operating independently or together with the main processor. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from the main processor 121 or as part of the main processor 121.

For example, the auxiliary processor 123 may control at least part of the functions or states associated with at least one (e.g., the display module 160, the sensor module 176, or the communication module 190) of the components of the electronic device 101, instead of the main processor 121 while the main processor 121 is in an inactive (e.g., sleep) state or together with the main processor 121 while the main processor 121 is in an active (e.g., the execution of an application) state. According to an embodiment, the auxiliary processor 123 (e.g., an image signal processor or a communication processor) may be implemented as a part of operatively associated other components (e.g., the camera module 180 or the communication module 190). According to an embodiment, the auxiliary processor 123 (e.g., a neural network processing unit) may include a hardware structure specialized to process an artificial intelligence model. The artificial intelligence model may be generated through machine learning. For example, the learning may be performed in the electronic device 101, in which an artificial intelligence model is performed, or may be performed through a separate server (e.g., the server 108). For example, the learning algorithm may include supervised learning, unsupervised learning, semi-supervised learning, or reinforcement learning, but is not limited to the above example. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the networks, but may not be limited to the above-described example. In addition to a hardware structure, additionally or alternatively, the artificial intelligence model may include a software structure.

The memory 130 may store various pieces of data used by at least one component (e.g., the processor 120 or the sensor module 176) of the electronic device 101. For example, data may include software (e.g., the program 140) and input data or output data for instructions associated with the software. The memory 130 may include the volatile memory 132 or the nonvolatile memory 134.

The program 140 may be stored in the memory 130 as software, and may include, for example, an operating system 142, a middleware 144, or an application 146.

The input module 150 may receive instructions or data to be used for the component (e.g., the processor 120) of electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for a general purpose, such as multimedia play or recording play. The receiver may be used to receive an incoming call. According to an embodiment, the receiver may be implemented separately from the speaker or may be implemented as a part of the speaker.

The display module 160 may visually provide information to the outside (e.g., the user) of the electronic device 101. The display module 160 may include, for example, a display, a hologram device, or a control circuit for controlling a projector and a corresponding device. According to an embodiment, the display module 160 may include a touch sensor configured to sense a touch, or a pressure sensor configured to measure the strength of force generated by the touch.

The audio module 170 may convert sound to an electrical signal, or reversely, may convert an electrical signal to sound. According to an embodiment, the audio module 170 may obtain sound through the input module 150, or may output sound through the sound output module 155, or through an external electronic device (e.g., the electronic device 102, a speaker, or a headphone) directly or wirelessly connected with the electronic device 101.

The sensor module 176 may sense an operation state (e.g., power or a temperature) of the electronic device 101 or an external environment state (e.g., a user state), and may generate an electrical signal or a data value corresponding the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 177 may support one or more specified protocols that may be used to directly and wirelessly connect the electronic device 101 with an external electronic device (e.g., the electronic device 102). According to an embodiment, the interface 177 may include, for example, an HDMI (high-definition multimedia interface), a USB (universal serial bus) interface, an SD card interface, or an audio interface.

The connecting terminal 178 may include a connector that may allow the electronic device 101 to be physically connected with an external electronic device (e.g., the electronic device 102). According to an embodiment, the connecting terminal 178 may include, for example, a HDMI connector, an USB connector, an SD card connector, or an audio connector (e.g., a headphone connector).

The haptic module 179 may convert an electrical signal to a mechanical stimulation (e.g., vibration or movement) or an electrical stimulation which the user may perceive through the sense of touch or the sense of movement. According to an embodiment, the haptic module 179 may include, for example, a motor, a piezoelectric sensor, or an electrical stimulation device.

The camera module 180 may shoot a still image or a video image. According to an embodiment, the camera module 180 may include one or more lenses, image sensors, image signal processors, or flashes (or electrical flashes).

The power management module 188 may manage the power which is supplied to the electronic device 101. According to an embodiment, the power management module 188 may be implemented, for example, as at least part of a power management integrated circuit (PMIC).

The battery 189 may power at least one component of the electronic device 101. According to an embodiment, the battery 189 may include, for example, a primary cell not rechargeable, a secondary cell rechargeable, or a fuel cell.

The communication module 190 may establish a direct (or wired) communication channel or a wireless communication channel between the electronic device 101 and an external electronic device (e.g., the electronic device 102, the electronic device 104, or the server 108) and may perform communication through the established communication channel. The communication module 190 may include one or more communication processors which are operated independently of the processor 120 (e.g., an application processor) and support direct (or wired) communication or wireless communication. According to an embodiment, the communication module 190 may include a wireless communication module 192 (e.g., a cellular communication module, a short range wireless communication module, or a global navigation satellite system (GNSS) communication module) or a wired communication module 194 (e.g., a local area network (LAN) communication module or a power line communication module). The corresponding communication module among these communication modules may communicate with an external electronic device 104 through a first network 198 (e.g., a short-range communication network such as Bluetooth, wireless fidelity (WiFi) direct or infrared data association (IrDA)) or a second network 199 (e.g., long-range wireless communication network such as a legacy cellular network, 5G networks, next-generation communication networks, Internet, or computer networks (e.g., LAN or WAN)). The above-described kinds of communication modules may be integrated in one component (e.g., a single chip) or may be implemented with a plurality of components (e.g., a plurality of chips) which are independent of each other. The wireless communication module 192 may identify or authenticate the electronic device 101 within a communication network, such as the first network 198 or the second network 199, by using subscriber information (e.g., international mobile subscriber identity (IMSI)) stored in the subscriber identification module 196.

The wireless communication module 192 may support a 5G network and a next-generation communication technology after a 4G network, for example, a new radio (NR) access technology. The NR access technology may support enhanced mobile broadband (eMBB), massive machine type communications (mMTC), or ultra-reliable and low-latency communications (URLLC). For example, the wireless communication module 192 may support a high frequency band (e.g., mmWave band) to achieve a high data transfer rate. The wireless communication module 192 may support various technologies for securing performance in a high frequency band, for example, technologies such as beamforming, massive multiple-input and multiple-output (massive MIMO), full dimensional MIMO (FD-MIMO), an array antenna, analog beam-forming, and a large scale antenna. The wireless communication module 192 may support various requirements regulated in the electronic device 101, an external electronic device (e.g., the electronic device 104) or a network system (e.g., the second network 199). According to an embodiment, the wireless communication module 192 may support peak data rate (e.g., 20 Gbps or more) for eMBB implementation, loss coverage (e.g., 164 dB or less) for mMTC implementation, or U-plane latency (e.g., downlink (DL) of 0.5 ms or less and uplink (UL) of 0.5 ms or less, or round trip of 1 ms or less) for URLLC implementation.

The antenna module 197 may transmit a signal or a power to the outside (e.g., an external electronic device) or may receive a signal or a power from the outside. According to an embodiment, the antenna module 197 may include an antenna including a radiator formed of a conductor or a conductive pattern formed on a substrate (e.g., PCB). According to one embodiment, the antenna module 197 may include a plurality of antennas (e.g., an array antenna). In this case, at least one antenna suitable for a communication scheme used in a communication network such as the first network 198 or the second network 199 may be selected, for example, by the communication module 190 from the plurality of antennas. The signal or power may be exchanged between the communication module 190 and an external electronic device through the selected at least one antenna or may be received from the external electronic device through the selected at least one antenna and the communication module 190. According to some embodiments, other parts (e.g., radio frequency integrated circuit (RFIC)) may be additionally formed as a part of the antenna module 197 in addition to the radiator.

According to various embodiments, the antenna module 197 may form an mmWave antenna module. According to an embodiment, the mmWave antenna module may include a printed circuit board (PCB), a radio frequency integrated circuit (RFIC), and a plurality of antennas (e.g., an array antenna). The RFIC may be disposed on or adjacent to a first surface (e.g., a bottom surface) of the PCB and may support a specified high frequency band (e.g., mmWave band). The plurality of antennas may be disposed on or adjacent to a second surface (e.g., a top surface or a side surface) of the PCB and may transmit or receive a signal in the specified high frequency band.

At least some of the components may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, the command or data may be transmitted or received between the electronic device 101 and the external electronic device 104 through the server 108 connected to the second network 199. Each of the external electronic device 102 or 104 may be a device of which the type is the same as or different from that of the electronic device 101. According to an embodiment, all or a part of operations to be executed by the electronic device 101 may be executed in one or more external electronic devices among the external electronic devices 102, 104, or 108. For example, when the electronic device 101 needs to perform any function or service automatically or in response to a request from the user or any other device, the electronic device 101 may additionally request one or more external electronic devices to perform at least part of the function or service, instead of internally executing the function or service. The one or more external electronic devices which receive the request may execute at least a part of the function or service thus requested or an additional function or service associated with the request, and may provide a result of the execution to the electronic device 101. The electronic device 101 may process the result as it is or additionally, and may provide a result of the processing as at least a part of the response to the request. To this end, for example, cloud computing, distributed computing, mobile edge computing (MEC), or client-server computing may be used. For example, the electronic device 101 may provide an ultra-low latency service by using distributed computing or mobile edge computing. In another embodiment, the external electronic device 104 may include an Internet of Things (IoT) device. The server 108 may be an intelligent server using machine learning and/or a neural network. According to an embodiment, the external electronic device 104 or the server 108 may be included in the second network 199. The electronic device 101 may be applied to an intelligent service (e.g., a smart home, a smart city, a smart car, or a healthcare) based on 5G communication technology and IoT-related technology.

The electronic device 101 according to various embodiments disclosed in the specification may be implemented with various types of devices. The electronic device 101 may include, for example, a portable communication device (e.g., a smartphone), a computer device, a portable multimedia device, a mobile medical appliance, a camera, a wearable device, or a home appliance. The electronic device 101 according to an embodiment of this specification may not be limited to the above-described devices.

Various embodiments of the disclosure and terms used herein are not intended to limit the technical features described in the disclosure to specific embodiments, and it should be understood that the embodiments and the terms include modification, equivalent, or alternative on the corresponding embodiments described herein. With regard to description of drawings, similar or related components may be marked by similar reference marks/numerals. The singular form of the noun corresponding to an item may include one or more of items, unless interpreted otherwise in context. In the disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

In various embodiments of the disclosure, the term "module" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the disclosure may be implemented with software (e.g., program 140) including one or more instructions stored in a storage medium (e.g., the embedded memory 136 or the external memory 138) readable by a machine (e.g., the electronic device 101). For example, the processor (e.g., the processor 120) of the machine (e.g., the electronic device 101) may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

According to an embodiment, a method according to various embodiments disclosed herein may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of on-line distribution, at least part of the computer program product may be at least temporarily stored in the machine-readable storage medium such as the memory of a manufacturer's server, an application store's server, or a relay server or may be generated temporarily.

According to various embodiments, each component (e.g., a module or a program) of the above-described components may include a single entity or a plurality of entities, and some of the plurality of objects may be separately arranged on other components. According to various embodiments, one or more components of the above-described components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

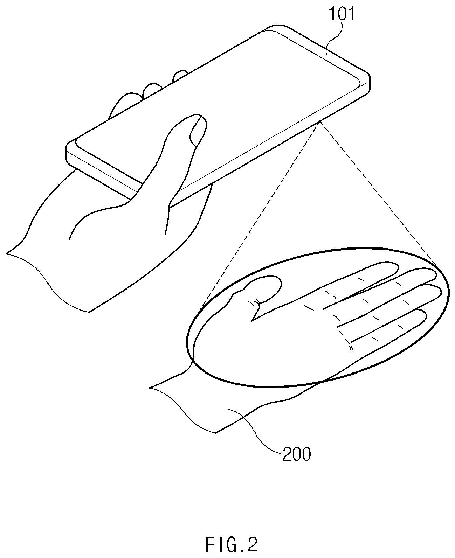

According to various embodiments, the electronic device 101 may support a palm print recognition function that extracts and authenticates palm print information (e.g., lines and fine wrinkles of a palm) as biometric information. This is described in detail below with reference to FIGS. 2 to 16B. Moreover, at least one embodiment among various embodiments described with reference to FIGS. 2 to 16B may be combined with other embodiments.

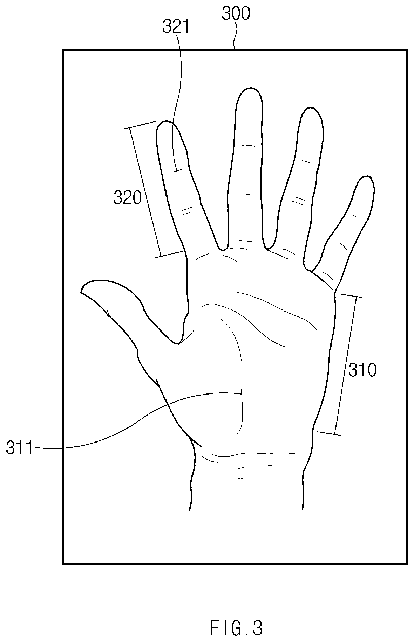

FIG. 2 is a diagram for describing a palm print recognition function supported by the electronic device 101, according to various embodiments. Furthermore, FIG. 3 is a diagram for describing an operation of extracting biometric information in the electronic device 101, according to various embodiments.

Referring to FIG. 2, the electronic device 101 according to various embodiments may acquire an image including a portion of a user's body 200. According to one embodiment, the electronic device 101 may acquire a palm image 300 captured through the camera module 180, as shown in FIG. 3.

According to various embodiments, the electronic device 101 may extract a user's biometric information from the acquired image (e.g., the palm image 300). According to one embodiment, the biometric information may be a palm print (e.g., a palm's lines and fine lines).

The palm image 300 may include a hand area including a palm area 310 and a finger area 320, as shown in FIG. 3. For example, the electronic device 101 may extract a palm print 311 included in the palm area 310 and/or a palm print 321 included in the finger area 320. However, this is only an example, and various embodiments are not limited thereto. For example, various pieces of biometric information, such as blood vessel patterns, fingerprints, or finger shapes, may be extracted.

According to various embodiments, the electronic device 101 may authenticate a user based on the extracted biometric information (e.g., the palm print 311 (e.g., the palm print of the palm area 310) and/or the palm print 321 (e.g., the palm print of the finger area 320)). According to an embodiment, the electronic device 101 may authenticate the user based on the result of comparing the extracted biometric information with a stored template. The stored template may include feature information about at least one of palm lines of a specified user, the user's blood vessel pattern, or the user's fingerprint. For example, when biometric information having a similarity greater than a threshold value with a stored template is extracted, the electronic device 101 may determine that the authentication is successful. Moreover, when the biometric information having the similarity less than the threshold value with the stored template is extracted, the electronic device 101 may determine that the authentication fails. According to an embodiment, when the user is successfully authenticated, the electronic device 101 may also execute a specified function (e.g., unlocking a lock function).

As described above, the electronic device 101 according to various embodiments may provide security having a certain level by extracting the biometric information (e.g., the palm print 321 and the palm print 311) from the palm area 310 as well as the finger area 320.

However, some (e.g., biometric information formed in the center of the palm area 310) of the biometric information included in the palm image 300 may be suitable for user authentication, while other portions (e.g., biometric information formed at the edge of the palm area 310) may be unsuitable for user authentication.

Palm prints (e.g., the palm print 321 and the palm print 311) obtained as biometric information may be formed by ridges, which are convex areas, and valleys which are concave areas of a palm surface.

For example, some of the biometric information included in the palm image 300 may be a palm print, in which ridges and valleys are clearly distinguishable from each other, and which has a size and/or a length exceeding a certain level, and may be suitable for user authentication. However, other of the biometric information included in the palm image 300 may be a palm print, in which ridges and valleys are not clearly distinguishable from each other, and which has a size and/or a length less than the certain level, and may not be suitable for user authentication.

Accordingly, when acquiring biometric information across the entire hand area, computations are performed on unnecessary areas of the palm image 300 (e.g., areas including palm prints unsuitable for user authentication), thereby increasing computational load and resource consumption.

In this regard, the electronic device 101 according to various embodiments may select an area within the palm image 300, in which meaningful biometric information is predicted to be actually located, as a palm print recognition area (e.g., a region of interest (ROI)). Accordingly, an area from which the biometric information is extracted is limited to the palm print recognition area, thereby reducing the computational load and resource consumption required for biometric information extraction. An operation of selecting the palm print recognition area will be described in detail with reference to the following drawings.

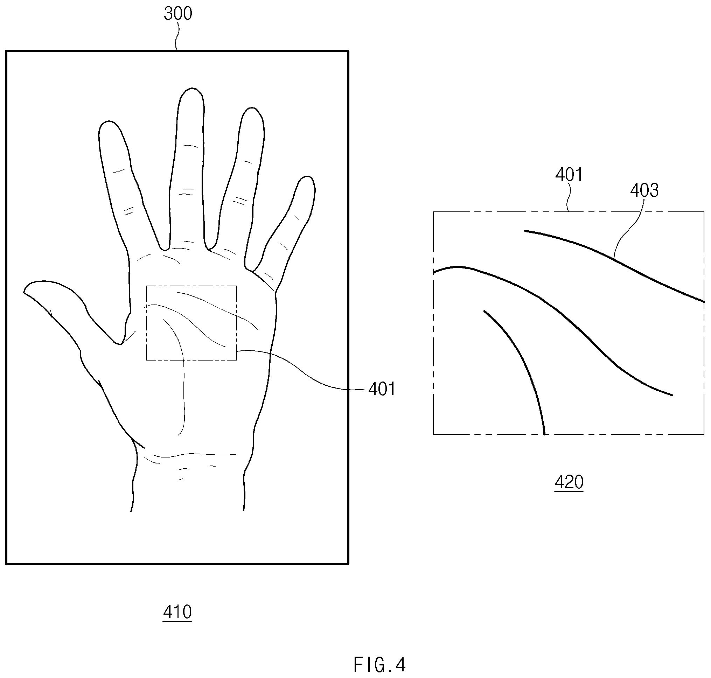

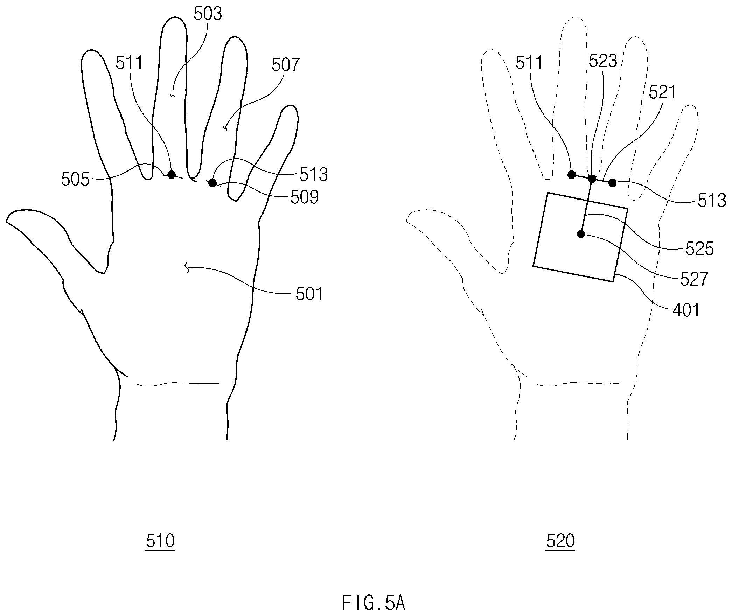

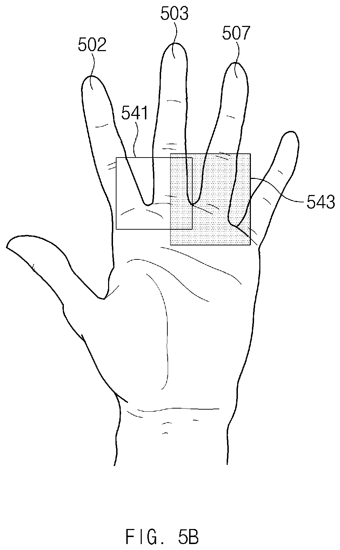

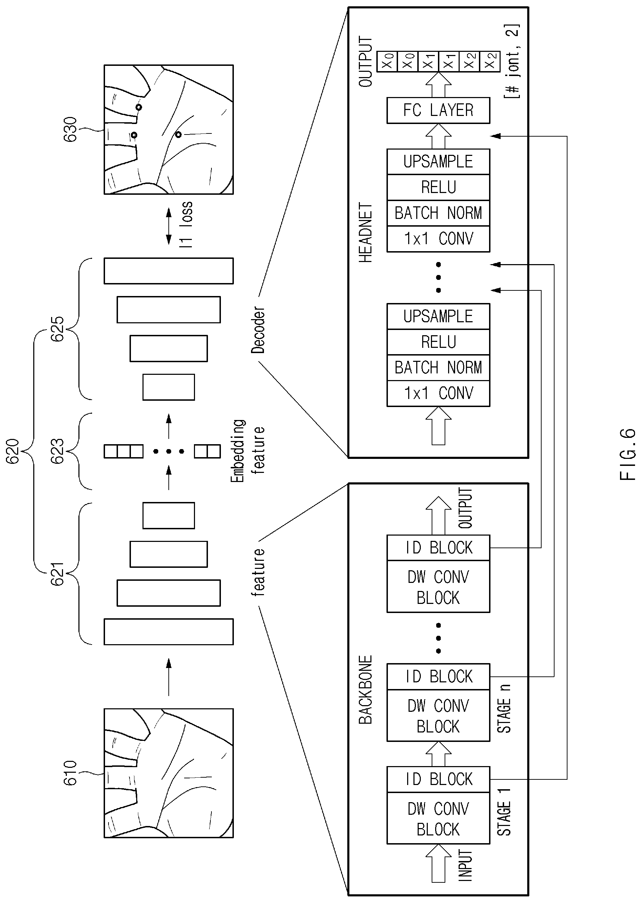

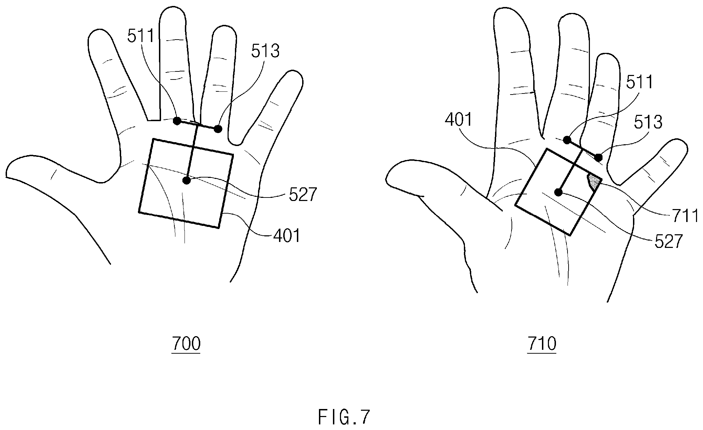

FIG. 4 is a diagram for describing an operation of extracting biometric information from a palm print recognition area in the electronic device 101, according to various embodiments. Moreover, FIGS. 5A and 5B are diagrams for describing an operation of setting a palm print recognition area in the electronic device 101, according to various embodiments. FIG. 6 is a diagram for describing an operation of extracting feature coordinates from the palm image 300 in the electronic device 101, according to various embodiments. FIG. 7 is a diagram for describing a palm print recognition area according to the posture of a palm.

Referring to FIG. 4, the electronic device 101 according to various embodiments may select a palm print recognition area 401 from the palm image 300, as shown at 410 of FIG. 4. The palm print recognition area 401 may be a region within the palm image 300 where meaningful biometric information is predicted to be located. According to an embodiment, the electronic device 101 may select, as the palm print recognition area 401, an area within the palm image 300 where ridges and valleys are clearly distinguished and/or an area where a palm print having a size and/or length greater than or equal to a certain level is predicted to be located.

According to various embodiments, the electronic device 101 may extract biometric information 403 from the palm print recognition area 401, as shown at 420 of FIG. 4. According to an embodiment, the electronic device 101 may exclude an operation of extracting biometric information about areas other than the palm print recognition area 401 of the palm image 300. Accordingly, the electronic device 101 may reduce computational load and resource consumption by omitting the execution of an operation on at least part of the palm image 300 including biometric information unsuitable for user authentication.

According to various embodiments, in selecting the palm print recognition area 401, the electronic device 101 may obtain at least two feature coordinates from the palm image 300 and may use the at least two feature coordinates to select the palm print recognition area 401. The at least two feature coordinates capable of being used to select the palm print recognition area 401 may be included in a boundary line 505 or 509 formed by the palm area 310 and the finger area 320.

According to an embodiment, as illustrated in 500 of FIG. 5A, first feature coordinates 511 included in the first boundary line 505 (e.g., the center of the first boundary line 505) formed by a middle finger area 503 and a palm area 501, and second feature coordinates 513 included in the second boundary line 509 (e.g., the center of the second boundary line 509) formed by a ring finger area 507 and the palm area 501, may be used to select the palm print recognition area 401.

For example, as illustrated in 520 of FIG. 5A, the electronic device 101 may use a point 527 included in a perpendicular bisector line 525 based on a center 523 of a line segment 521 having the first feature coordinates 511 and the second feature coordinates 513 as endpoints as the center of the palm print recognition area 401. For example, the electronic device 101 may define the point 527, which is 1.5 times the length of the line segment 521 from the center 523 of the line segment 521, as the center of the palm print recognition area 401, and may select the palm print recognition area 401 in the shape of a square that is parallel to the line segment 521 and has the length of a side twice that of the line segment 521.

However, this is merely an example, and various embodiments are not limited thereto. For example, the center of the palm print recognition area 401 may be located at a position twice the length of the line segment 521. Besides, a square area having a side length 1.5 times that of the line segment 521 may be selected as the palm print recognition area 401.

As described above, the at least two feature coordinates capable of being used to select the palm print recognition area 401 may be included in the boundary line 505 or 509 formed by the palm area 310 and the finger area 320.

In this regard, as illustrated in FIG. 5B, the electronic device 101 according to various embodiments may extract at least two feature coordinates (e.g., the first feature coordinates 511 and the second feature coordinates 513) centered around an extraction area (e.g., a first extraction area 541 encompassing an index finger 502 and a middle finger 503, and a second extraction area 543 encompassing the middle finger 503 and a ring finger 507) encompassing between fingers.

However, the aforementioned extraction areas (e.g., the first extraction area 541 and the second extraction area 543) are areas with a certain width and height. Therefore, in addition to at least two feature coordinates, operations are performed on unnecessary areas, thereby increasing the computational load and consuming significant resources.

In this regard, the electronic device 101 according to various embodiments may reduce the amount of computation and resource consumption required for feature coordinate extraction by using a feature coordinate detector configured to extract only at least two feature coordinates from the palm image 300.

According to various embodiments, as illustrated in FIG. 6, a feature coordinate detector 620 may be a lightweight network designed based on depthwise separable convolution. However, this is merely an example, and various embodiments are not limited thereto. For example, the feature coordinate detector 620 may be designed by using various known methods in addition to the depthwise separable convolution.

According to an embodiment, the feature coordinate detector 620 may be formed by a combination of a depthwise convolution 621 and a pointwise convolution 625.

For example, the depthwise convolution 621 may generate a feature map 623 by performing an operation with a single filter on an input image 610. For example, when the number of input channels is 'M', 'M' feature maps may be generated. For example, the pointwise convolution 625 may adjust the number of channels for feature maps 623 generated by the depthwise convolution 621.

According to an embodiment, the feature coordinate detector 620 accurately extracts (630) at least two feature coordinates capable of being used to select the palm print recognition area 401 from the palm image 610 by applying the pointwise convolution 625 after the depthwise convolution 621, thereby reducing the computational load and resource consumption required for feature coordinate extraction.

Additionally or alternatively, according to various embodiments, when failing to extract biometric information from the palm print recognition area 401, the electronic device 101 may select another palm print recognition area. According to an embodiment, the electronic device 101 may expand the palm print recognition area 401 in a certain direction and/or a size based on the previously selected palm print recognition area 401. Moreover, according to various embodiments, when biometric information extraction from the pre-selected palm print recognition area 401 fails, the biometric information may be acquired from the entire palm image 300 or from another palm image.

As described above, the electronic device 101 according to various embodiments may increase palm print recognition speed and may improve palm print recognition performance by extracting biometric information from the palm print recognition area 401.

In this regard, the electronic device 101 according to various embodiments may select the palm print recognition area 401 from a reference posture. The reference posture may include a state in which a palm surface is parallel to the camera module 180.

However, depending on the distance and angle between the palm surface and the camera module 180 at a point in time when the palm image 300 is captured, a palm posture in the palm image 300 may be rotated by a certain rotation angle from a reference posture. It is difficult to select the palm print recognition area 401 from such a rotated palm posture (e.g., a posture different from the reference posture).

Besides, as illustrated in 700 of FIG. 7, when the palm print recognition area 401 is selected in the reference posture, the biometric information formed in the palm print recognition area 401 may be suitable information for use in user authentication. However, as illustrated in 710 of FIG. 7, even when the palm print recognition area 401 is selected in a state of a non-reference posture, the biometric information formed in at least part 711 of the palm print recognition area 401 may be unsuitable for use in user authentication. In other words, the palm print recognition area 401 may be distorted by the rotation of the palm, and thus biometric information unsuitable for user authentication may be extracted.

In this regard, the electronic device 101 according to various embodiments may dynamically adjust the palm print recognition area 401 based on the posture of the palm. For example, dynamically adjusting the palm print recognition area 401 may include varying at least one of the size, direction, or shape of the palm print recognition area 401. Dynamic adjustment of the palm print recognition area 401 will be described in detail with reference to the drawings below.

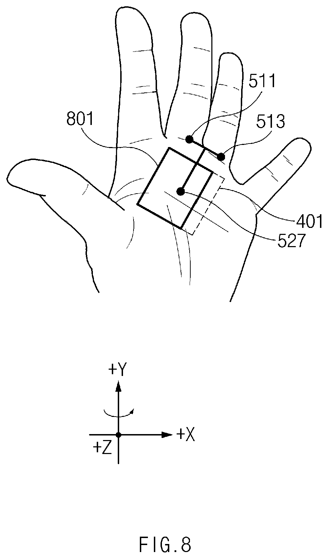

FIGS. 8 to 11 are drawings for describing an operation of dynamically adjusting the palm print recognition area 401 in the electronic device 101, according to various embodiments.

Referring to FIGS. 8 to 11, the electronic device 101 according to various embodiments may dynamically adjust the palm print recognition area 401 based on the posture of the palm.

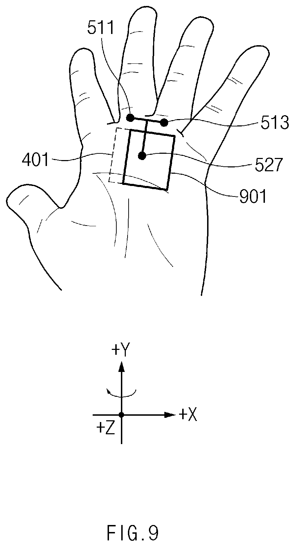

The posture of the palm may include a first posture and a second posture. According to an embodiment, as illustrated in FIG. 8, the first posture may be a posture rotated in a first direction (e.g., clockwise) about a first axis (e.g., the y-axis) along the major axis of the palm. The major axis may follow the direction of a finger. For example, the first axis may be a middle finger. Moreover, as illustrated in FIG. 9, the second posture may be a posture rotated in a second direction (e.g., counterclockwise) opposite to the first direction about the first axis.

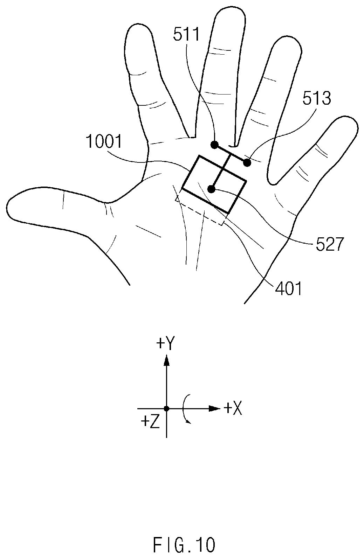

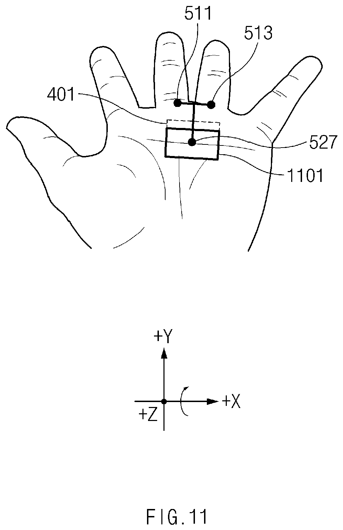

Additionally or alternatively, the posture of the palm may include a third posture and a fourth posture. According to an embodiment, as illustrated in FIG. 10, the third posture may be a posture rotated in a third direction (e.g., clockwise) about a second axis (e.g., x-axis) along the minor axis of the palm, which is perpendicular to the major axis. Furthermore, as illustrated in FIG. 11, the fourth posture may be a posture rotated in a fourth direction (e.g., counterclockwise) opposite to the third direction about the second axis.

According to various embodiments, when recognizing a palm in the first posture and the second posture by analyzing the palm image 300, the electronic device 101 may adjust the third axis (e.g., a width or horizontal axis) of the palm print recognition area 401 corresponding to the major axis of the palm.

For example, as illustrated in FIG. 8, when recognizing a palm in the first posture, the electronic device 101 may fix one end of the third axis of the palm print recognition area 401 and may reduce (801) the other end. For another example, as illustrated in FIG. 9, when recognizing a palm in the second posture, the electronic device 101 may fix the other end of the third axis of the palm print recognition area 401 and may reduce (901) the one end.

According to various embodiments, when recognizing a palm in the third posture and the fourth posture by analyzing a palm image, the electronic device 101 may adjust the fourth axis (e.g., height or vertical axis) of the palm print recognition area 401 corresponding to the minor axis of a palm.

For example, as illustrated in FIG. 10, when recognizing a palm in the third posture, the electronic device 101 may fix one end of the fourth axis of the palm print recognition area 401 and may reduce (1001) the other end. For another example, as illustrated in FIG. 11, when recognizing a palm in the fourth posture, the electronic device 101 may fix the other end of the fourth axis of the palm print recognition area 101 and may reduce (1101) the one end.

As described above, the electronic device 101 according to various embodiments may dynamically adjust the palm print recognition area 401 based on the posture of the palm. In this regard, the electronic device 101 according to various embodiments may determine whether a palm in the palm image 300 takes a specified posture. The specified posture may be a palm posture rotated to a level where meaningful biometric information is capable of being extracted (e.g., a rotation angle of less than 15°).

According to an embodiment, when the specified palm posture is not identified, the electronic device 101 may perform an operation of acquiring a new palm image. For example, when the palm print recognition area 401 is distorted to a level where meaningful biometric information is incapable of being extracted due to the rotation of a palm, the electronic device 101 may provide guide information for inducing the specified posture of the palm.

According to an embodiment, only when the specified palm posture is identified, the electronic device 101 may dynamically adjust the palm print recognition area 401. In this regard, in identifying the specified palm posture, the electronic device 101 according to various embodiments may acquire at least three feature coordinates from the palm image 300. The identifying of the posture of a palm is described in detail with reference to the drawings below.

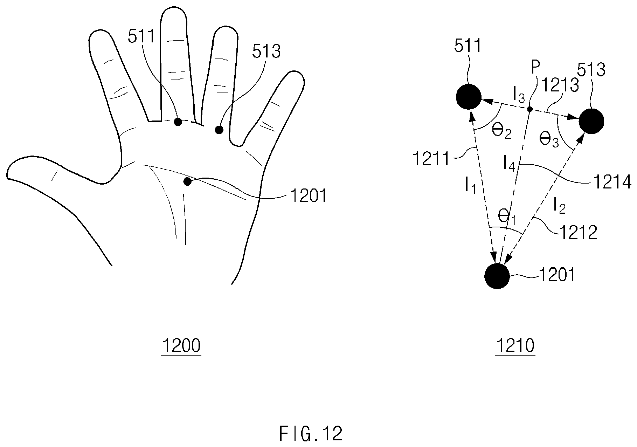

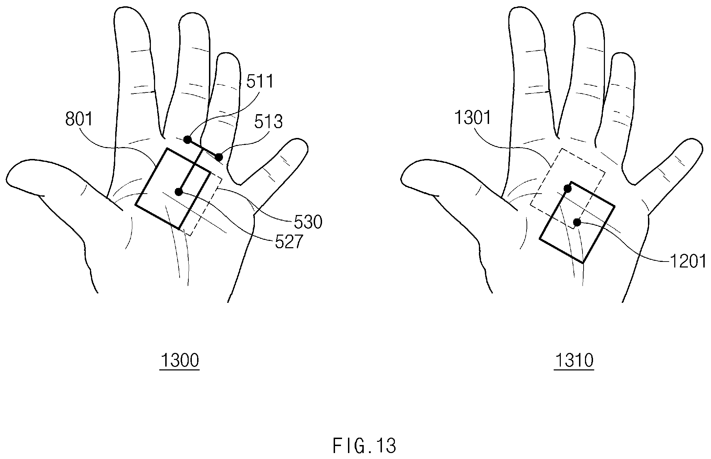

FIG. 12 is a drawing for describing an operation of identifying the posture of a palm in the electronic device 101, according to various embodiments. Moreover, FIG. 13 is a drawing for describing an operation of correcting a location of the palm print recognition area 401 in the electronic device 101, according to various embodiments.

Referring to FIG. 12, the electronic device 101 according to various embodiments may identify the posture of a palm based on at least three feature coordinates obtained from the palm image 300. According to an embodiment, as illustrated in 1200 of FIG. 12, the at least three feature coordinates may include at least two feature coordinates (e.g., the first feature coordinates 511 and the second feature coordinates 513) capable of being used to select the palm print recognition area 401 and third feature coordinates 1201, which are center coordinates of the palm area 320.

For example, as illustrated in 1210 of FIG. 12, the electronic device 101 may determine whether a palm takes a specified posture, based on a length 11 of a first line segment 1211 having the first feature coordinates 511 and the third feature coordinates 1201 as endpoints, a length 12 of a second line segment 1212 having the second feature coordinates 513 and the third feature coordinates 1201 as endpoints, and a first angle θ1 formed by the first line segment 1211 and the second line segment.

For example, the electronic device 101 may compare the length 11 of the first line segment 1211, the length 12 of the second line segment 1212, and the first angle θ1 with a first threshold length, a second threshold length, and a first threshold angle, respectively. Moreover, when at least some of the comparison results satisfy a specified condition, the electronic device 101 may determine that the palm takes the specified posture. However, this is merely an example, and various embodiments are not limited thereto. For example, the electronic device 101 may store the palm posture corresponding to the length 11 of the first line segment 1211, the length 12 of the second line segment 1212, and the first angle θ1 in table forms. In this case, the electronic device 101 may identify the palm posture corresponding to the length l1 of the first line segment 1211, the length 12 of the second line segment 1212, and the first angle θ1. Moreover, in identifying the palm posture, a second angle θ2 formed by the first line segment 1211 and a third line segment 1213 and a third angle θ3 formed by the second line segment 1212 and the third line segment 1213 may be additionally considered.

As described above, only when a palm taking a specified posture in the palm area is identified, the electronic device 101 according to various embodiments may dynamically adjust the palm print recognition area 401.

Additionally or alternatively, in correcting the palm print recognition area 401, the electronic device 101 according to various embodiments may determine a correction value for the palm print recognition area 401 based on the degree rotation of a palm.

For example, when the palm is rotated by a first rotation angle relative to the first axis, the electronic device 101 may reduce the third axis (e.g., a width or horizontal axis) of the palm print recognition area 401 by the first length. Also, when the palm is rotated by a second rotation angle greater than the first rotation angle relative to the first axis, the electronic device 101 may reduce the third axis of the palm print recognition area 401 by the second length greater than the first length.

For example, when the palm is rotated by the first rotation angle relative to the second axis, the electronic device 101 may reduce the fourth axis (e.g., a height or vertical axis) of the palm print recognition area 401 by the first length. Besides, when the palm is rotated by the second rotation angle greater than the first rotation angle relative to the second axis, the electronic device 101 may reduce the fourth axis of the palm print recognition area 401 by the second length greater than the first length.

According to various embodiments, in determining a correction value for the palm print recognition area 401, the electronic device 101 may obtain at least three feature coordinates from the palm image 300. For example, the at least three feature coordinates used to determine the correction value for the palm print recognition area 401 may include the first feature coordinates 511, the second feature coordinates 513, and the third feature coordinates 1201 that are described above.

According to an embodiment, as illustrated in 1200 of FIG. 12, the electronic device 101 may determine a correction value for the palm print recognition area 401 based on a ratio α between a length 13 of a third line segment having the first feature coordinates 511 and the second feature coordinates 513 as endpoints, and a length 14 of a fourth line segment 1214 having a midpoint 'P' of the third line segment 1213 and the third feature coordinates 1201 as endpoints.

For example, when the palm takes a reference posture, the ratio α of the length 14 of the fourth line segment 1214 to the length l3 of the third line segment 1213 may be greater than or equal to a first threshold value 'x' and less than a second threshold value 'y' (x<α<y). In this regard, when the ratio α of the length 14 of the fourth line segment 1214 to the length 13 of the third line segment 1213 is greater than or equal to the first threshold value 'x' and less than the second threshold value 'y', the electronic device 101 may select the palm print recognition area 401 in a square shape having a length 'L' in the third axis direction and the length 'L' in the fourth axis direction.

For example, when the palm is rotated by a certain rotation angle (e.g., 15° or more) with respect to the first axis, the ratio α of the length 14 of the fourth line segment 1214 to the length 13 of the third line segment 1213 may exceed the second threshold value 'y'. For example, as the rotation angle of the palm with respect to the first axis increases, the ratio α of the length 14 of the fourth line segment 1214 to the length 13 of the third line segment 1213 may also increase. In this regard, when the ratio α of the length 14 of the fourth line segment 1214 to the length 13 of the third line segment 1213 exceeds the second threshold value 'y', the electronic device 101 may select the palm print recognition area 401 having a length in the third axis direction that is inversely proportional to the ratio α. For example, the electronic device 101 may control the palm print recognition area 401 in a rectangular shape having a length L*(1/α) in the third axis direction and the length 'L' in the fourth axis direction.

For example, when the palm is rotated by a certain rotation angle (e.g., 15° or more) with respect to the second axis, the ratio α of the length 14 of the fourth line segment 1214 to the length 13 of the third line segment 1213 may be less than the first threshold value 'x'. For example, as the rotation angle of the palm with respect to the second axis increases, the ratio α of the length 14 of the fourth line segment 1214 to the length l3 of the third line segment 1213 may decrease. In this regard, when the ratio α of the length 14 of the fourth line segment 1214 to the length 13 of the third line segment 1213 is less than the first threshold value 'x', the electronic device 101 may select the palm print recognition area 401 having a length in the fourth axis direction that is proportional to the ratio α. For example, the electronic device 101 may adjust the palm print recognition area 401 into a rectangular shape having the length 'L' in the third axis direction and the length L*(α) in the fourth axis direction.

Additionally or alternatively, the electronic device 101 according to various embodiments may perform a normalization operation on the adjusted palm print recognition area 401. For example, the electronic device 101 may perform horizontal distortion correction and/or vertical distortion correction on the palm print recognition area 401. This normalization process may facilitate the extraction of biometric information from the palm print recognition area 401.

Additionally or alternatively, the electronic device 101 according to various embodiments may correct the location of the adjusted palm print recognition area 401 as part of the normalization process. According to an embodiment, the distortion of the palm print recognition area 401 may also be proportional to the degree of rotation of the palm. In this regard, the electronic device 101 according to various embodiments may identify a palm rotated beyond a certain degree, as illustrated in 1300 of FIG. 13. In this case, the electronic device 101 may move the adjusted center of the palm print recognition area 401 to the center 1201 of the palm surface, as illustrated in 1310 of FIG. 13.

According to various embodiments, the processor 120 may include a secure area (e.g., a trust zone) and a non-secure area. For example, the secure area and the non-secure area within the processor 120 may be physically or logically distinct from each other. According to an embodiment, at least some of the above-described embodiments may be executed through the secure area of the processor 120. For example, the above-described embodiments may be executed through the secure area or the general area of the processor 120, or some of the above-described embodiments may be executed through the general area and other parts may be executed through the secure area.

The electronic device 101 according to various embodiments may include the camera module 180, the at least one processor 120, and the memory 130. The memory 130 may store instructions that, when executed by the at least one processor 120, cause the electronic device 101 to obtain at least three feature coordinates 511, 513, and 1201 from the palm image 300 obtained through the camera module 180, to identify a rotation angle for a palm based on the at least three feature coordinates 511, 513, and 1201, and to adjust the palm print recognition area 401 based on the rotation angle for the palm.

According to various embodiments, the processor 120 (e.g., processing circuit) may be implemented as one or more integrated circuit (or circuitry) chips and may perform various data processing operations. The processor 120 may include at least one electrical circuit and may individually or collectively distribute and process instructions (or programs, data) stored in the memory 123. The processor 120 may include a processor assembly including one or more processing circuits. The processor 120 may include any processing circuit operative to control the performance and operations of one or more components of the electronic device 101 (e.g., the memory 130, the display 160, the sensor module 176 (e.g., a sensor), the camera module 180 (e.g., an image sensor), and/or the communication module 190 (e.g., a communication circuit)). For example, the processor 120 (e.g., an application processor (AP)) may be implemented as a system on chip (SoC) (e.g., a single chip or a chipset). For example, the processor 120 may be implemented as a plurality of cores (or at least one core circuit), a plurality of chips, or a plurality of chipsets. For example, the processor 120 may include one or more processing circuits. For example, the processor 120 may include one or more processing circuits configured to individually and/or collectively perform various functions of the disclosure. As a non-limiting example, at least part of the processor 120 may be included in a first chip of the electronic device 101, and at least another part of the processor 120 may be included in a second chip of the electronic device 101 different from the first chip of the electronic device 101.

According to various embodiments, the rotation angle for the palm includes at least one of a first rotation angle rotated in a first direction or a second direction about a first axis along a major axis of the palm, and a second rotation angle rotated in a third direction or a fourth direction about a second axis along a minor axis of the palm.

According to various embodiments, the instructions may cause the electronic device 101 to adjust a horizontal length of the palm print recognition area 401 to a first length when the first rotation angle is within a specified first range.

According to various embodiments, the instructions may cause the electronic device 101 to adjust (801, 901) the horizontal length of the palm print recognition area 401 to a second length that is shorter than the first length when the first rotation angle is outside the specified first range.

According to various embodiments, the second length may be inversely proportional to the first rotation angle.

According to various embodiments, the instructions may cause the electronic device 101 to adjust a vertical length of the palm print recognition area 401 to a third length when the second rotation angle is within a specified second range.

According to various embodiments, the instructions may cause the electronic device 101 to adjust (1001, 1101) the vertical length of the palm print recognition area 401 to a fourth length that is shorter than the third length when the first rotation angle is outside the specified second range.

According to various embodiments, the fourth length may be inversely proportional to the second rotation angle.

According to various embodiments, the instructions may cause the electronic device 101 to adjust the horizontal length of the palm print recognition area 401 and the vertical length of the palm print recognition area 401 to have the same length 520 when the first rotation angle is within the specified first range and the second rotation angle is within the specified second range.

According to various embodiments, the at least three feature coordinates 511, 513, and 1201 may include at least one of the first feature coordinates 511 included in the first boundary line 505 formed by the middle finger area 503 and the palm area 501, the second feature coordinates 513 included in the second boundary line 509 formed by the ring finger area 507 and the palm area 501, and the third feature coordinates 1201 that is center coordinates of the palm area 501.

According to various embodiments, the instructions may cause the electronic device 101 to position the center coordinates of the palm print recognition area 401 on the perpendicular bisector line 525 of the line segment 521 that formed by the first feature coordinates 511 and the second feature coordinates 513.

According to various embodiments, the instructions may cause the electronic device 101 to position the center coordinates of the palm print recognition area 401 on the third feature coordinates 1201 when the center coordinates of the palm print recognition area 401 is outside a certain range from the third feature coordinates 1201.

According to various embodiments, the instructions may cause the electronic device 101 to obtain biometric information based on the adjusted palm print recognition area 401, 801, 901, 1101, or 1201.

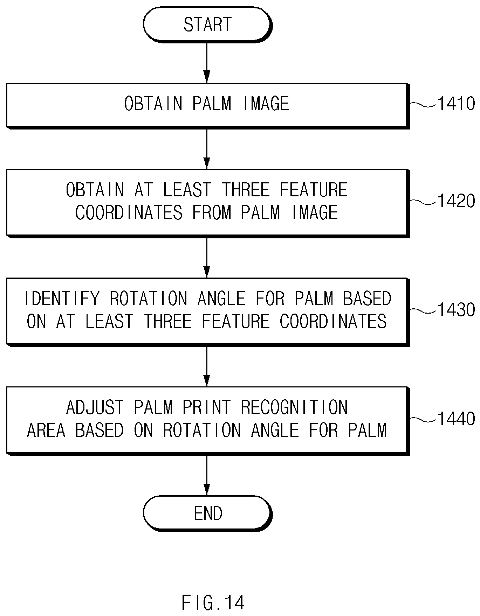

FIG. 14 is a flowchart illustrating an operation of the electronic device 101, according to various embodiments. Moreover, each operation in the following embodiments may be sequentially performed, but is not necessarily sequentially performed. For example, the order of operations may be changed, and at least two operations may be performed in parallel. Also, at least one of the following operations may be omitted according to an embodiment.

Referring to FIG. 14, in operation 1410, the electronic device 101 (e.g., the processor 120) according to various embodiments may obtain the palm image 300. According to an embodiment, the electronic device 101 may acquire the palm image 300 via the camera module 180.

According to various embodiments, in operation 1420, the electronic device 101 (e.g., the processor 120) may obtain at least three feature coordinates from the palm image 300. According to an embodiment, the at least three feature coordinates may include at least two feature coordinates (e.g., the first feature coordinates 511 and the second feature coordinates 513) capable of being used to select the palm print recognition area 401 described with reference to FIG. 12, and the third feature coordinates 1201, which are center coordinates of the palm area 320. However, this is merely an example, and various embodiments are not limited thereto. For example, in addition to the aforementioned feature coordinates, other feature coordinates may be acquired from the palm image 300.

According to various embodiments, in operation 1430, the electronic device 101 (e.g., the processor 120) may identify a rotation angle for a palm based on the at least three feature coordinates. According to an embodiment, as described above with reference to FIG. 12, the electronic device 101 may determine whether a palm taking a specified posture is identified in the palm image 300, based on the at least three feature coordinates.

According to various embodiments, in operation 1440, the electronic device 101 (e.g., the processor 120) may adjust the palm print recognition area 401 based on the rotation angle for the palm.

According to an embodiment, as illustrated through FIG. 5A, the electronic device 101 may select the palm print recognition area 401 based on the first feature coordinates 511 included in the first boundary line 505 (e.g., the center of the first boundary line 505) formed by the middle finger area 503 and the palm area 501, and the second feature coordinates 513 included in the second boundary line 509 (e.g., the center of the second boundary line 509) formed by the ring finger area 507 and the palm area 501.

Furthermore, the electronic device 101 may adjust the palm print recognition area 401 based on a rotation angle for the palm. According to an embodiment, the electronic device 101 may dynamically adjust the palm print recognition area 401 based on the posture of the palm, as described above with reference to FIGS. 8 to 11.

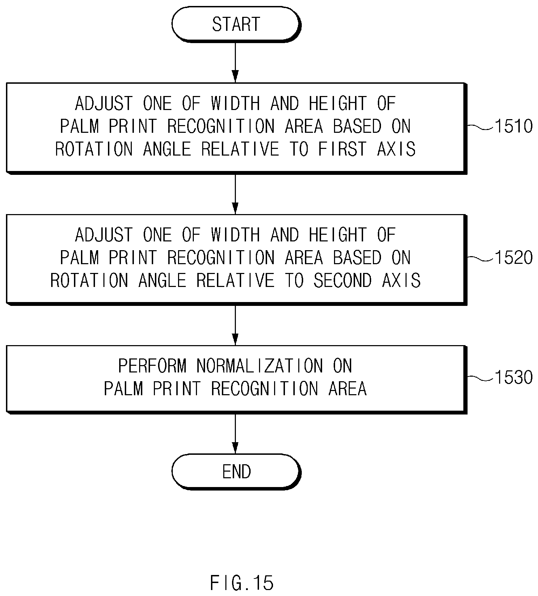

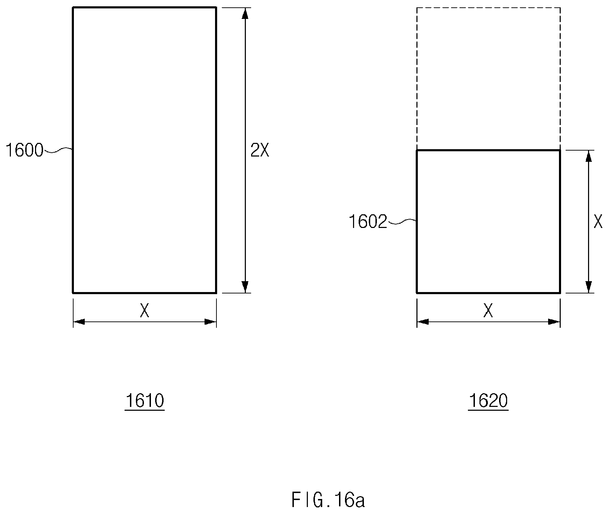

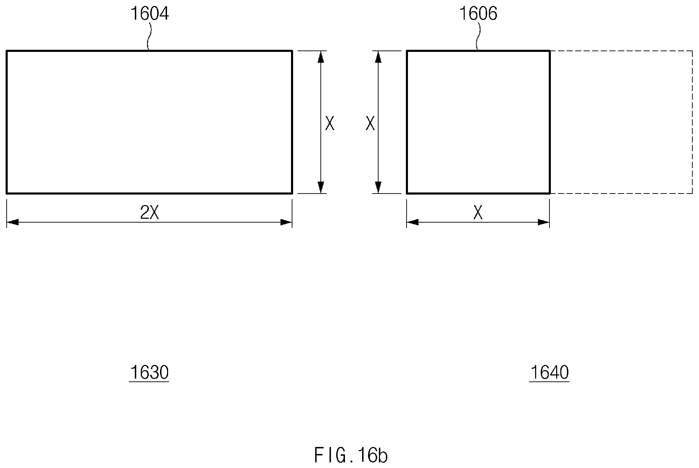

FIG. 15 is a flowchart for describing an operation of adjusting the palm print recognition area of the electronic device 101, according to various embodiments. Moreover, FIGS. 16A and 16B may be one of various embodiments of operation 1440 for describing a normalization operation on the palm print recognition area 401, according to various embodiments. Moreover, operations in the following embodiments may be performed sequentially, but are not necessarily performed sequentially, and at least one operation may be omitted according to an embodiment.

Referring to FIG. 15, the electronic device 101 (e.g., the processor 120) according to various embodiments may adjust one of the width and height of the palm print recognition area 401 based on a rotation angle relative to the first axis in operation 1510. The first axis may follow the major axis of a palm. The first axis may be a middle finger. According to an embodiment, as described above with reference to FIGS. 8 and 9, the electronic device 100 may adjust the width of the palm print recognition area 401 in proportion to a rotation angle.

According to various embodiments, in operation 1520, the electronic device 101 (e.g., the processor 120) may adjust the other of the width and height of the palm print recognition area 401 based on a rotation angle relative to a second axis. The second axis may follow a minor axis of the palm that is perpendicular to the major axis of the palm. According to an embodiment, as described above with reference to FIGS. 10 and 11, the electronic device 100 may adjust the height of the palm print recognition area 401 in proportion to the rotation angle.

According to various embodiments, in operation 1530, the electronic device 101 (e.g., the processor 120) may perform a normalization operation on the palm print recognition area 401. For example, the normalization operation may include an operation of correcting the palm print recognition area 401, which has been adjusted through operations 1510 and 1520, into a specified shape. For example, the electronic device 101 may correct the palm print recognition area 401, which has a rectangular shape, which has been adjusted through operations 1510 and 1520, into a square shape.

For example, as illustrated in 1610 of FIG. 16A, a palm print recognition area 1600 obtained from palm images of a first posture and a second posture may have a rectangular shape with a height 2X greater than a width 'X'. In this regard, as illustrated in 1620 of FIG. 16A, the electronic device 101 may correct a palm print recognition area 1602 into a square shape with the same width 'X' as a height 'X'.

For example, as illustrated in 1630 of FIG. 16B, a palm print recognition area 1604 obtained from palm images of a third posture and a fourth posture may have a rectangular shape with a width 2X greater than the height 'X'. In this regard, as illustrated in 1640 of FIG. 16B, the electronic device 101 may correct the palm print recognition area 1604 into a square shape with the same width 'X' as the height 'X'.

The normalization operation described above is an example, and various embodiments are not limited thereto. For example, the normalization operation may be performed in various known ways, and the electronic device 101 may facilitate the extraction of biometric information from the normalized palm print recognition area.

According to an embodiment, the electronic device 101 may correct at least one of color, contrast, or brightness of the palm print recognition area 401 as part of the normalization operation. In this regard, the electronic device 101 may perform a normalization task by using various machine learning techniques.

Additionally or alternatively, the electronic device 101 may change the location of the palm print recognition area 401 as part of the normalization task. According to an embodiment, as described above with reference to FIG. 13, the electronic device 101 may move the center of the palm print recognition area 401 to the center 1201 of the palm surface.

According to various embodiments, an operating method of the electronic device 101 may include obtaining the at least three feature coordinates 511, 513, and 1201 from the palm image 300 obtained through the camera module 180, identifying a rotation angle for a palm based on the at least three feature coordinates, and adjusting the palm print recognition area 401 based on the rotation angle for the palm.

According to various embodiments, the rotation angle for the palm includes at least one of a first rotation angle rotated in a first direction or a second direction about a first axis along a major axis of the palm, and a second rotation angle rotated in a third direction or a fourth direction about a second axis along a minor axis of the palm.

According to various embodiments, the operating method of the electronic device 101 may include adjusting a horizontal length of the palm print recognition area 401 to a first length when the first rotation angle is within a specified first range.

According to various embodiments, the operating method of the electronic device 101 may include adjusting (801, 901) the horizontal length of the palm print recognition area 401 to a second length that is shorter than the first length when the first rotation angle is outside the specified first range.

According to various embodiments, the second length may be inversely proportional to the first rotation angle.

According to various embodiments, the operating method of the electronic device 101 may include adjusting a vertical length of the palm print recognition area 401 to a third length when the second rotation angle is within a specified second range.

According to various embodiments, the operating method of the electronic device 101 may include adjusting (1001, 1101) the vertical length of the palm print recognition area 401 to a fourth length that is shorter than the third length when the first rotation angle is outside the specified second range.

According to various embodiments, the fourth length may be inversely proportional to the second rotation angle.

According to various embodiments, the operating method of the electronic device 101 may include adjusting (520) the horizontal length of the palm print recognition area 401 and the vertical length of the palm print recognition area 401 to have the same length when the first rotation angle is within the specified first range and the second rotation angle is within the specified second range.

According to various embodiments, the at least three feature coordinates 511, 513, and 1201 may include at least one of the first feature coordinates 511 included in the first boundary line 505 formed by the middle finger area 503 and the palm area 501, the second feature coordinates 513 included in the second boundary line 509 formed by the ring finger area 507 and the palm area 501, and the third feature coordinates 1201 that is center coordinates of the palm area 501.

According to various embodiments, the operating method of the electronic device 101 may include positioning the center coordinates of the palm print recognition area 401 on the perpendicular bisector line 525 of the line segment 521 that formed by the first feature coordinates 511 and the second feature coordinates 513.

According to various embodiments, the operating method of the electronic device 101 may include positioning the center coordinates of the palm print recognition area 401 on the third feature coordinates 1201 when the center coordinates of the palm print recognition area 401 is outside a certain range from the third feature coordinates 1201.

According to various embodiments, the operating method of the electronic device 101 may include obtaining biometric information based on the adjusted palm print recognition area 401, 801, 901, 1101, or 1201.

According to various embodiments, a computer-readable recording medium may store instructions for obtaining the at least three feature coordinates 511, 513, and 1201 from the palm image 300 obtained through the camera module 180, identifying a rotation angle for a palm based on the at least three feature coordinates, and adjusting the palm print recognition area 401 based on the rotation angle for the palm.

## Claims

1. An electronic device (101), comprising:
a camera module (180);
at least one processor (120); and
memory (130) storing instructions that, when executed by the at least one processor, cause the electronic device (101) to:
obtain at least three feature coordinates (511, 513, 1201) from a palm image (300) obtained through the camera module (180);
identify a rotation angle for a palm based on the at least three feature coordinates; and
adjust a palm print recognition area (401) based on the rotation angle for the palm.

2. The electronic device of claim 1, wherein the rotation angle for the palm includes at least one of:
a first rotation angle rotated in a first direction or a second direction about a first axis along a major axis of the palm, and
a second rotation angle rotated in a third direction or a fourth direction about a second axis along a minor axis of the palm.

3. The electronic device of claim 2, wherein the instructions cause the electronic device to:
when the first rotation angle is within a specified first range, adjust a horizontal length of the palm print recognition area (401) to a first length; and
when the first rotation angle is outside the specified first range, adjust (801, 901) the horizontal length of the palm print recognition area (401) to a second length that is shorter than the first length.

4. The electronic device of claim 3, wherein the second length is adjusted inversely proportional to the first rotation angle.

5. The electronic device of claim 2, wherein the instructions cause the electronic device to:
when the second rotation angle is within a specified second range, adjust a vertical length of the palm print recognition area (401) to a third length; and
when the second rotation angle is outside the specified second range, adjust (1001, 1101) the vertical length of the palm print recognition area (401) to a fourth length that is shorter than the third length.

6. The electronic device of claim 5, wherein the fourth length is adjusted inversely proportional to the second rotation angle.

7. The electronic device of claim 2, wherein the instructions cause the electronic device to:
when the first rotation angle is within the specified first range and the second rotation angle is within the specified second range, adjust the horizontal length of the palm print recognition area (401) and the vertical length of the palm print recognition area (401) to have the same length (520).

8. The electronic device of any one of claims 1 to 7, wherein the at least three feature coordinates (511, 513, 1201) include at least one of:
a first feature coordinates (511) included in a first boundary line (505) formed by a middle finger area (503) and a palm area (501),
a second feature coordinates (513) included in a second boundary line (509) formed by a ring finger area (507) and the palm area (501), and
a third feature coordinates (1201) that is center coordinates of the palm area (501).

9. The electronic device of claim 8, wherein the instructions cause the electronic device to:
position a center coordinates of the palm print recognition area (401) on a perpendicular bisector line (525) of a line segment (521) that formed by the first feature coordinates (511) and the second feature coordinates (513).

10. The electronic device of claim 9, wherein the instructions cause the electronic device to:
when the center coordinates of the palmprint recognition area (401) is outside a certain range from the third feature coordinates (1201), position the center coordinates of the palm print recognition area (401) on the third feature coordinates (1201).

11. The electronic device of any one of claims 1, 4, 6 or 8, wherein the instructions cause the electronic device to:
obtain biometric information based on the adjusted palmprint recognition area (401, 801, 901, 1101, 1201).

12. An operating method of an electronic device (101), comprising:
obtaining at least three feature coordinates (511, 513, 1201) from a palm image (300) obtained through a camera module (180);
identifying a rotation angle for a palm based on the at least three feature coordinates; and
adjusting a palm print recognition area (401) based on the rotation angle for the palm.

13. The operating method of claim 12, wherein the at least three feature coordinates (511, 513, 1201) include at least one of:
a first feature coordinates (511) included in a first boundary line (505) formed by a middle finger area (503) and a palm area (501),
a second feature coordinates (513) included in a second boundary line (509) formed by a ring finger area (507) and the palm area (501), and
a third feature coordinates (1201) that is center coordinates of the palm area (501).

14. The operating method of claim 12, wherein the rotation angle for the palm includes at least one of: a first rotation angle rotated in a first direction or a second direction about a first axis along a major axis of the palm, and a second rotation rotated in a third direction or a fourth direction about a second axis along a minor axis of the palm,
further comprises:
when the first rotation angle is within a specified first range, adjusting a horizontal length of the palm print recognition area (401) to a first length; and
when the first rotation angle is outside the specified first range, adjusting (801, 901) the horizontal length of the palm print recognition area (401) to a second length that is shorter than the first length.

15. The operating method of claim 12, wherein the rotation angle for the palm includes at least one of: a first rotation angle rotated in a first direction or a second direction about a first axis along a major axis of the palm, and a second rotation rotated in a third direction or a fourth direction about a second axis along a minor axis of the palm,
further comprises:
when the second rotation angle is within a specified second range, adjusting a vertical length of the palm print recognition area (401) to a third length; and
when the first rotation angle is outside the specified second range, adjusting (1001, 1101) the vertical length of the palm print recognition area (401) to a fourth length that is shorter than the third length.
